Europäisches Patentamt

European Patent Office

Office européen des brevets

(19)

(11) Publication number : **0 487 001 A2**

(12) # EUROPEAN PATENT APPLICATION

(21) Application number : **91119659.0**

(22) Date of filing : **18.11.91**

(51) Int. Cl.⁵ : **G06F 9/46**

(30) Priority : **20.11.90 JP 315075/90**

(43) Date of publication of application :
**27.05.92 Bulletin 92/22**

(84) Designated Contracting States :
**DE GB**

(71) Applicant : **MITSUBISHI DENKI KABUSHIKI KAISHA**
**2-3, Marunouchi 2-chome Chiyoda-ku Tokyo 100 (JP)**

(72) Inventor : **Yamashita, Yoshiomi, c/o Mitsubishi Denki K.K.**
**Nagoya Works, 1-14, Yadaminami 5-chome, Higashi-ku**
**Nagoya-shi, Aichi (JP)**

(74) Representative : **Sajda, Wolf E., Dipl.-Phys. et al**
**MEISSNER, BOLTE & PARTNER**
**Widenmayerstrasse 48 Postfach 86 06 24**
**W-8000 München 86 (DE)**

(54) **A synchronous controlling method and apparatus for a multiprocessing system.**

(57) A multiprocessing system including a main processor (1) and a plurality of subprocessors (2) synchronized to execute allocated tasks and a synchronous controlling process therefor. The main processor (1) includes a scheduling device (5), a synchronization information registering device (6), a synchronization detection control signal generator (7), and a synchronization detector (8). The scheduling device (5) schedules and allocates tasks to each of the subprocessors (2) and generates corresponding task and synchronization information. When the subprocessor (2) has executed the assigned task, synchronization signals indicating the completion of execution of the assigned task are applied to the synchronization detection control signal generator (7). The synchronization detectors (8) then compare the synchronization information with the synchronization signals to generate a control signal to the scheduling device (5) to schedule other tasks.

FIG. 1

EP 0 487 001 A2

BACKGROUND OF THE INVENTION

The present invention relates to a multiprocessing system and more particularly to a main processor and a plurality of subprocessors synchronized to execute allocated tasks and to a synchronous controlling process therefor.

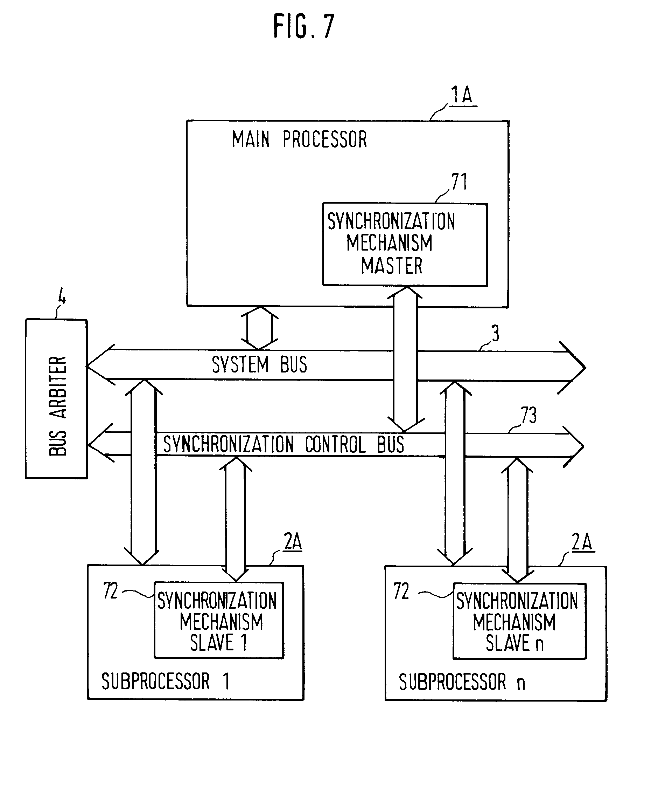

Fig. 7 is a block diagram illustrating a synchronization mechanism for a conventional multiprocessing system, which includes a main processor 1A, a plurality of subprocessors 2A, a system bus 3 acting as a communication path, a bus arbiter 4 for controlling the right of access to the system bus, a synchronization mechanism master 71, synchronization mechanism slaves 72, and a synchronization control bus 73.

In operation, a scheduler in the main processor 1A schedules tasks, which are to be executed by subprocessors 1 to n, and distributes or assigns each task to at least one of the n subprocessors 2A. On completion of executing an assigned task, each processor 2A notifies the completion to the main processor 1A. On receiving a completion signal from each subprocessor 2A, the main processor 1A synchronizes the tasks, reschedules tasks as soon as a series of tasks are completed, and redistributes the tasks to the subprocessors.

Each subprocessor 2A provides the completion signal to the main processor 1A in the manner as will now be described.

The operation involves the synchronization mechanism master 71 in the main processor 1A, the synchronization mechanism slaves 72 in the subprocessors 2A, and the synchronization control bus 73. On completing a task, the subprocessor 2A generates and applies the completion signal to the synchronization mechanism slave 72. The synchronization mechanism slave 72 then requests the bus arbiter 4 to grant it access to the synchronous control bus 73, and after gaining access, the completion signal is transmitted to the synchronization mechanism master 71 in the main processor 1A via the synchronous control bus 73.

An example of the synchronization mechanism in the prior art is disclosed in Japanese Patent Publication No. 14387/1988.

The conventional multiprocessing system configured as described above requires not only the synchronization mechanism master 71 on the main processor 1A, but also synchronization mechanism slaves 72 on all the subprocessors 2A. Further, the synchronization control bus 73 must be dedicated to synchronous processing, which requires a large amount of hardware. In addition, much time is required because synchronization is detected by software.

SUMMARY OF THE INVENTION

Accordingly, it is a general object of the present invention to provide a multiprocessing system and a synchronous controlling process therefor which are free of the above-mentioned problems and disadvantages.

It is also an object of the present invention to overcome the disadvantages in the prior art by providing a multiprocessing system and a synchronous controlling process therefor which can minimize the required hardware for synchronous processing as well as time needed for detection of synchronization.

In accordance with the above and other objects, the present invention provides a synchronous controlling process for a multiprocessing system including a main processor and a plurality of subprocessors connected to the main processor via a shared communication path, the process including the steps of causing the main processor to schedule an allocation of tasks to the plurality of subprocessors and to generate task information and synchronization information in accordance with execution of the tasks by the plurality of subprocessors, causing the main processor to output the task information and synchronization information to the plurality of subprocessors via the communication path as first data information and registering the synchronization information, causing the plurality of subprocessors to decode the first data information, execute corresponding tasks and output synchronization signals indicating completion of execution to the main processor via the communication path as second data information, and causing the main processor to compare the second data information with the registered synchronization information, detect an execution completion of each corresponding task, and schedule synchronous execution of next tasks by detecting an execution completion of all of the corresponding tasks.

Further in accordance with the above objects, the present invention provides a multiprocessing system including a main processor, and a plurality of subprocessors connected to the main processor via a shared communication path, wherein the main processor further includes a task scheduling means for scheduling and allocating tasks to the plurality of subprocessors and for generating task information and synchronization information based on the execution of the tasks, synchronization information registering means for registering the synchronization information, synchronization information outputting means for outputting the task information and synchronization information to the plurality of subprocessors via the communication path as first data information, and synchronization detecting means for comparing execution completion information based on corresponding tasks input from the plurality of subprocessors via the communication path as second data information with the registered synchronization information, detecting an execution completion for each corresponding task, and directing the task scheduling means to schedule the synchronous execution of next tasks on detecting execution completion of all of the allocated tasks.

## BRIEF DESCRIPTION OF THE DRAWINGS

Fig. 1 is a block diagram illustrating a synchronization detection system for use with a multiprocessing system according to one embodiment of the present invention.

Fig. 2 is a status transition diagram of the multiprocessing system shown in Fig. 1.

Fig. 3 is a hardware block diagram showing the multiprocessing system illustrated in Fig. 1 indicating software functions and data information locations.

Fig. 4 illustrates the configuration of a synchronization information registering section.

Fig. 5 illustrates the configuration of a synchronization detection control signal generator.

Fig. 6 illustrates the configuration of a synchronization detector.

Fig. 7 is a block diagram illustrating a conventional synchronization detection system for use with the multiprocessing system.

## DESCRIPTION OF THE PREFERRED EMBODIMENTS

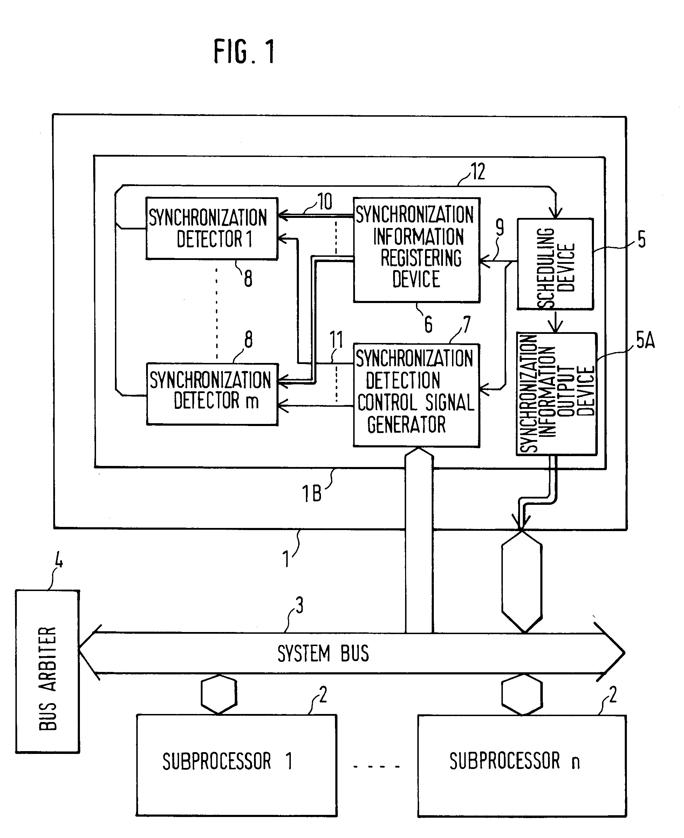

A first embodiment of the invention will now be described with reference to the accompanying drawings, Figs. 1 to 6, wherein like numerals in the different figures identify identical or corresponding parts.

Fig. 1 is a block diagram illustrating an overview of a multiprocessing system, which is composed of a main processor 1 including a synchronization mechanism section 1B, a plurality of subprocessors 2, a task scheduling device 5, a synchronization information registering device 6, a synchronization detection control signal generator 7, synchronization detectors 8, a synchronization information transfer path 9, a synchronization information setting path 10, a synchronization detection control signal transfer path 11, and a synchronization completion transfer path 12 for transferring synchronization completion signals representing the detection of synchronization from the synchronization detectors 8 to the scheduling device 5.

The task scheduling device 5 schedules all tasks in the multiprocessing system, allocates the tasks to the plurality of subprocessors 2, and generates task information and synchronization information, which is transferred to the synchronization information registering device 6 via the synchronization information transfer path 9. The synchronization information registering device 6 applies the synchronization information over the synchronization information setting path 10 to synchronization detectors 8 (described in detail below). The synchronization detection control signal generator 7 generates synchronization detection control signals in accordance with data information (e.g., corresponding task execution completion information), transmitted from the subprocessors 2 and puts out corresponding signals to the synchronization detectors 8, which compare the synchronization information with the synchronization detection control signals and detect synchronization (i.e, completion of all of side tasks allocated), via the synchronization detection control signal transfer path 11. The synchronization completion transfer path 12 transfers synchronization completion signals representing the detection of synchronization from the synchronization detectors 8 to the scheduling device 5.

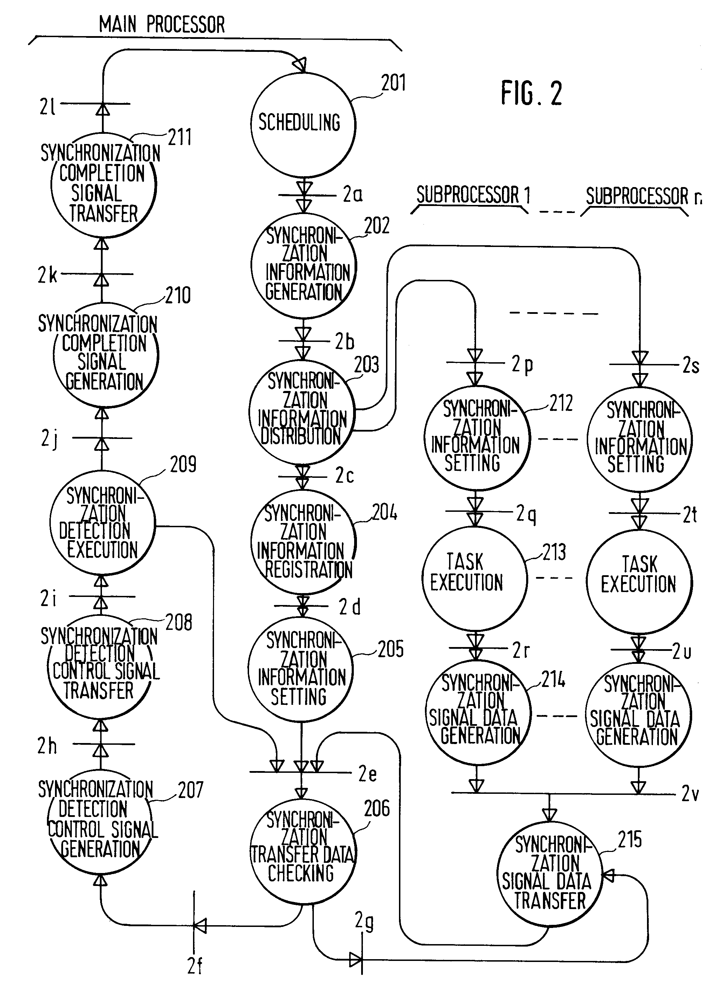

Fig. 2 illustrates a system status transition diagram showing the operational sequence of the multiprocessing system illustrated in Fig. 1. Each circular symbol in this diagram represents a given processing condition or status, also referred to herein as a "stage" or "state". As seen in the figure, the sequence includes a scheduling condition or stage 201 in the main processor 1, a task information and synchronization information generation condition or stage 202, a task information and synchronization information distribution stage 203 coupled to the plurality of subprocessors 2, a synchronization information registration condition 204 in the synchronization information registering device 6, a synchronization information setting state 205, a synchronization transfer data information checking condition 206, a synchronization detection control signal generation state 207, a synchronization detection control signal transfer condition 208, a synchronization detection execution condition 209, a synchronization completion signal generation 210, a synchronization completion signal transfer condition 211, a task information and synchronization information setting state 212, a task execution condition 213, a synchronization signal data generation condition 214, and synchronization signal data transfer condition 215. Reference numerals 2a to 2v indicate the transition from the preceding stage to the succeeding stage thereof.

The operation of the first embodiment will now be described with reference to Figs. 1 and 2.

The main processor 1 enters the scheduling stage 201, in which the scheduling device 5 determines the tasks to be executed by the subprocessors 1 to n. When this step is completed such that transition conditions at 2a are satisfied, the main processor 1 proceeds to the synchronization information generation stage 202, wherein the synchronization information required to synchronize tasks, such as the number of tasks to be synchronized, the task names, the processors assigned to the tasks, the controlling synchronization detector numbers, and the synchronization identification numbers for identifying the synchronization, is generated. The main processor 1 then proceeds to the task information and synchronization information distribution stage 203 so that the tasks and task numbers to be executed by the subprocessors 2 and the synchronization detector 8 numbers where the synchronization detection control signals will be transferred on the execution completion of the tasks executed , by the corresponding subprocessors 2 are transferred to the corresponding subprocessor 2 by the main processor 1 via the system bus 3. When transition conditions 2p and 2s are met, the subprocessors 2 go into the task information setting stage 212. - Next, from transition points 2q and 2t, the subprocessors 2 enter the task execution status 213.

In the meantime, from transition point 2c, the main processor 1 is placed in synchronization information registration status 204, wherein the synchronization information is transferred to the synchronization information registering device 6 through the synchronization information transfer path 9. When this step is completed at transition 2d, the main processor 1 is placed in synchronization information setting status 205, where the synchronization information registering device 6 transfers the synchronization information via the synchronization information setting path 10 to the synchronization detectors 8 specified by the synchronization information. According to this sychronization information, the number of tasks to be synchronized and the subprocessors executing these tasks are set to the synchronization detectors 8. On completing transitions 2r and 2u, the corresponding subprocessors 2 go into the synchronization signal data generation state 214, such that when the specified synchronization detectors 8 transfer the synchronization detector signals on completion of the tasks already transferred from the main processor 1, their corresponding subprocessor 2 numbers are synthesized and encoded to generate data, which are then transferred to the synchronization detection control signal generator 7. After transition 2v, the subprocessors 2 are placed in the synchronization signal data transfer condition 215, wherein the subprocessors 2 request the bus arbiter 4 to respectively grant each access to the system bus 3. After gaining access, the encoded synchronization signal data is transferred to the synchronization detection control signal generator 7 via the system bus 3. From transition 2e, the main processor 1 enters the synchronization transfer data information checking state 206, in which the synchronization detection control signal generator 7 decodes the synchronization signal data, generates the synchronization detector 8 numbers to which the synchronization detection control signal is to be transferred, generates the subprocessor 2 numbers which have completed task execution and have transferred the data information, and checks whether the synchronization signal data is valid.

When this step transitions are at 2h, the main processor 1 is placed in the synchronization detection signal transfer status 208, wherein the synchronization detection control signal generator 7 transfers to the corresponding synchronization detectors 8 via the synchronization detection control signal transfer path 11, the subprocessor 2 numbers which have completed task execution and have transferred the data information. Next, from transition 2i, the main processor 1 enters the synchronization detection execution state 209, wherein the synchronization detectors 8 verify (compare) the subprocessor 2 numbers executing the tasks related to synchronization in the present synchronization information with the subprocessor 2 numbers which have completed the tasks, transferred from the synchronization detection control signal generator 7. If any corresponding subprocessor number exists, that subprocessor number is deleted from the synchronization information and the number of tasks to be synchronized is decremented by 1.

When all of the subprocessor 2 numbers (i.e., synchronization information) set into the synchronization detectors 8 are deleted and the number of tasks to be synchronized has reached zero, the synchronization detectors 8 determine that the synchronization is complete and transition is at 2j. The main processor 1 then goes into synchronization completion signal generation status 210, in which synchronization completion signals are generated in accordance with the synchronization identification numbers and synchronization detector 8 numbers in the synchronization information. When this step is completed at transition 2k, the main processor 1 is placed in the synchronization completion signal transfer state 211, in which the synchronization detectors 8 transfer the synchronization completion signals to the scheduling device 5 via the synchronization completion signal transfer path 12. The main processor 1 is then placed again in the scheduling status 201 where the scheduling device 5 checks whether the combinations of the synchronization identification numbers and synchronization detector 8 numbers transferred as the synchronization completion signals match those at the time of scheduling.

When these numbers match, the main processor 1 determines that the synchronization is complete and resumes scheduling in order to allocate tasks to the subprocessors 2 that have completed execution. On the other hand, if the synchronization has not been completed in the synchronization transfer data information checking state 206, the main processor 1 waits for the condition 2e.

The overall operation is performed as described above and is repeated until all corresponding tasks allocated in the multiprocessing system are completed. On completion, the operation returns to the first scheduling step and is then repeated to perform synchronous control of the multiprocessing system.

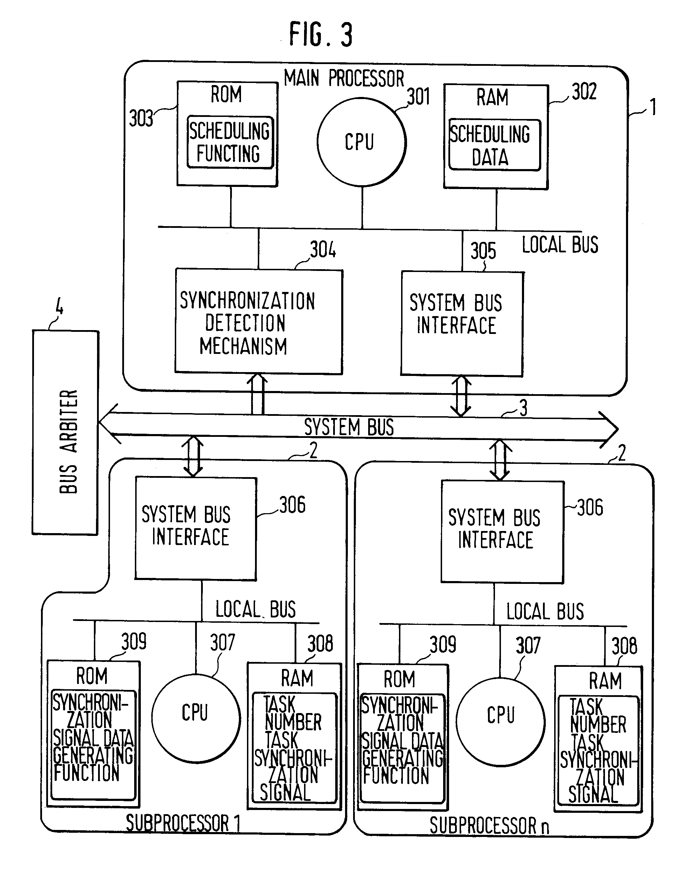

Fig. 3 illustrates a hardware configuration of the multiprocessing system shown in Fig. 1, indicating software functions and data information locations.

Referring to Fig. 3, there is shown a CPU 301 in the main processor 1, a RAM 302 for storing scheduling data, and a ROM 303 for storing a program to be executed by the CPU 301 for generating a scheduling function, a synchronization detection mechanism 304, a system bus interface 305, a system bus interface 306 to the subprocessors 2, CPUs 307 in the subprocessors 2, RAMs 308 for storing task numbers and task synchronization numbers, and ROMs 309 for storing programs to be executed by the CPUs 307 for generating a synchronization signal data generating function.

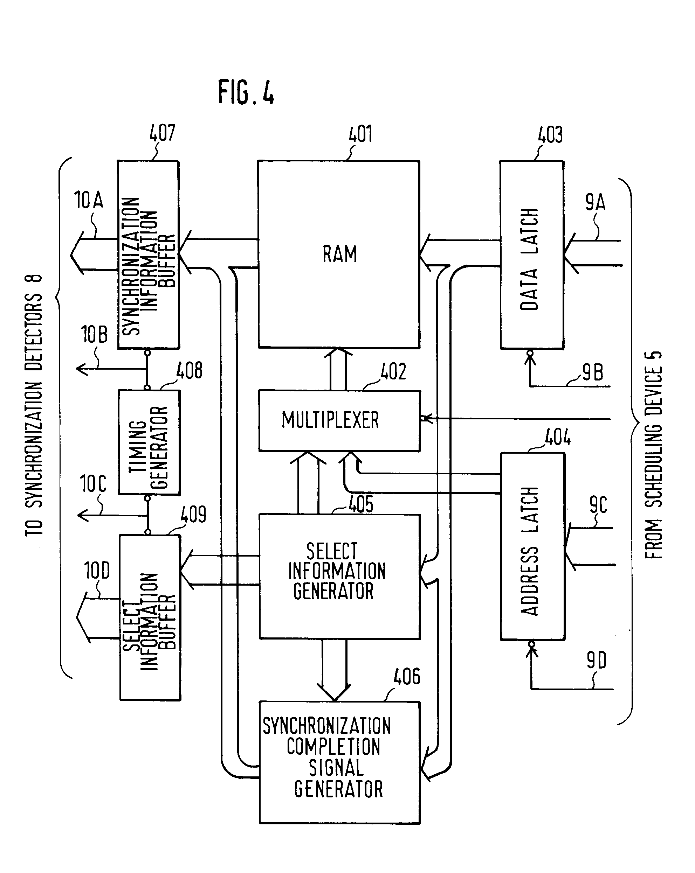

The synchronization information registering device 6, the synchronization detection control signal generator 7, and the synchronization detectors 8 constitute the synchronization detection mechanism 304 shown in Fig. 3, and will now be described with reference to Figs. 4 through 6.

Fig. 4 is a block diagram illustrating the synchronization information registering device 6. In Fig. 4, reference numeral 401 indicates a RAM for storing the synchronization information, numeral 402 indicates a multiplexer for selecting the address of the RAM 401, numeral 403 designates a latch for latching the data information incoming from the scheduling device 5, numeral 404 represents an address latch for latching the address data incoming from the scheduling device 5, reference numeral 405 designates a select information generator for generating select information, which is outputted to the synchronization detectors 8, numeral 407 indicates a synchronization information buffer, numeral 409 indicates a select information buffer, and reference numeral 408 represents a timing generator. The destination to which data is transferred is determined by the select information generator 405, wherein a select signal is transferred to a corresponding comparator of the synchronization detectors 8 via a path set above.

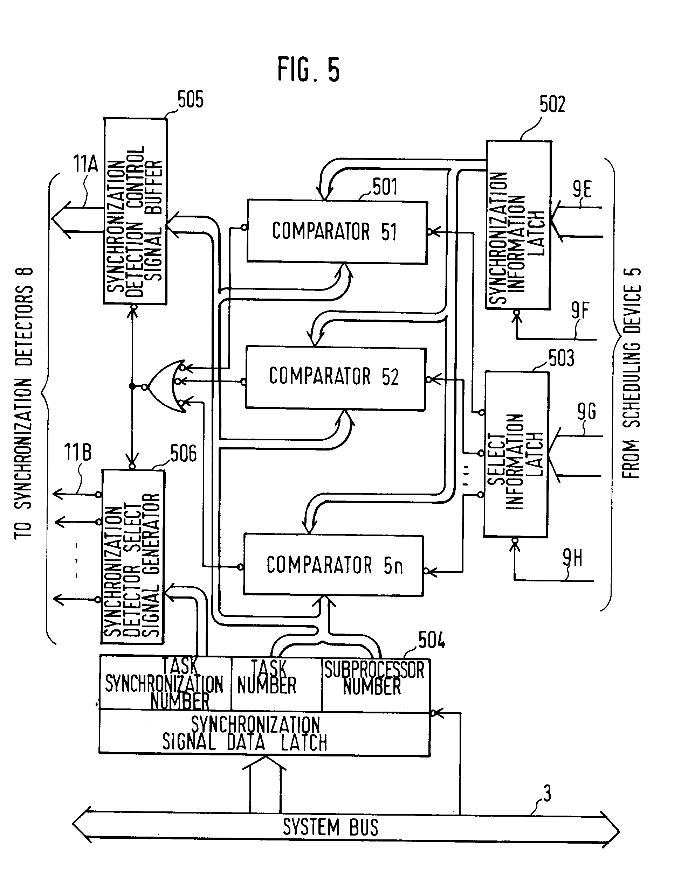

Fig. 5 is a block diagram showing the synchronization detection control signal generator 7 illustrated in Fig. 1, which includes a comparator 501 for comparing the synchronization information with the synchronization signals, a synchronization information latch 502, a select information latch 503, a synchronization signal data latch 504 for latching the synchronization signal data from the subprocessors 2, a synchronization detection control signal buffer 505, and a synchronization detection select signal generator 506.

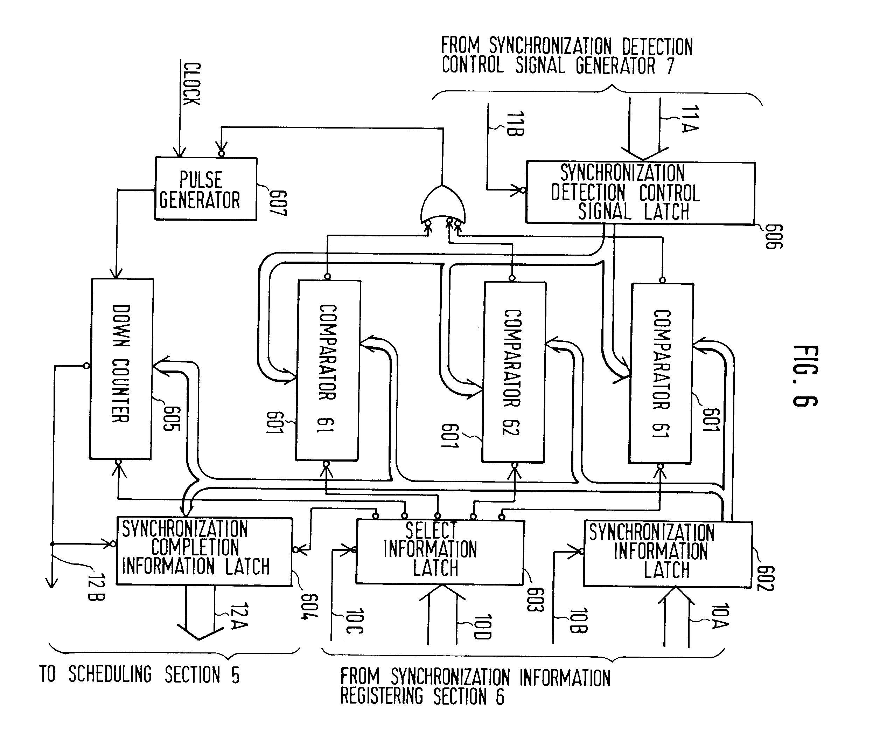

Fig. 6 is a block diagram illustrating the synchronization detector 8 of Fig. 1, which includes comparators 601 for comparing the synchronization information latched by a synchronization information latch 602 with a synchronization detection control signal latched by a synchronization detection control signal latch 606, the synchronization information latch 602 for latching the synchronization information coming from the synchronization information registering section 6, a select information latch 603 for selecting any one of the plurality of comparators 601, a synchronization completion information latch 604 for latching the synchronization completion information received from the synchronization information registering section 6, a down counter 605 for decrementing the synchronization information by one when a valid synchronization detection control signal is entered and for outputting the synchronization completion information to the scheduling device 5 when the synchronization information reaches zero, the synchronization detection control signal latch 606 for latching the synchronization detection control signal coming from the synchronization detection control signal generator 7, and a pulse generator 607 for generating down-counting pulses, which are applied to the down counter 605.

The operation of the synchronization detection mechanism 304 in the synchronization mechanism 1B will now be described with reference to Figs. 3 through 6.

When the CPU 301 executes the program stored in the ROM 303, the scheduling function is generated in the scheduling device 5 which then schedules and allocates the tasks to the plurality of subprocessors 2. In addition, the scheduling device 5 generates synchronization information related to the execution and synchronization of the tasks which is applied to the synchronization information registering device 6 and the synchronization detection control signal generator 7.

In the synchronization information registering device 6, the data information from the scheduling device 5 is latched at the data latch 403 and the address data is latched at the address latch 404 (Fig. 4). The latched data information is stored and registered in the RAM 401 and its addresses are set by the multiplexer 402 in accordance with the latched address data. The logical number of synchronization detectors 8 which should be selected are set in the select information generator 405 via data latch 403. The select information generator 405 calculates a physical address and generates select information, based on this logical number.

The synchronization completion signal generator 406, which receives synchronization information via data latch 403, generates synchronization completion signals which are applied to the scheduling device 5 when synchronization is completed.

Next, the synchronization information which has been registered by the synchronization information registering section 6 is set in a destination of synchronization detectors 8 which has been determined by the select information generator 405.

Task numbers which are to be executed are set in the comparators 601 of the synchronization detectors 8. Task numbers which are synchronized are set in the down counter 605. Synchronization completion information is set in synchronization completion information latch 604.

In the synchronization detection control signal generator 7, the synchronization information sent from the scheduling device 5, which includes the task number and subprocessor number, is latched by the synchronization information latch 502 and the select information is latched by the select information latch 503 (Fig. 5). The latched synchronization information determines which comparator 501 is to be used. The synchronization signal data from the subprocessors 2, which are output when the subprocessor completes its processing, is latched by the synchronization signal data latch 504, and the synchronization information is compared with the synchronization signals by the comparators 501. When a match in regards to the task numbers, subprocessor 2 numbers, and so on, occurs, the synchronization signal data is output to the synchronization detectors 8 via the synchronization detection control signal buffer 505. At the same time, the synchronization detector select signals corresponding to the task synchronization numbers gained from the synchronization signal data are generated and output by the synchronization detector select signal generator 506. A synchronization detection control signal is output to synchronization detector 8 selected by the synchronization detector select signal generator 506.

In the synchronization detector 8 shown in Fig. 6, the synchronization information from the synchronization information registering device 6 is latched via the synchronization information latch 602 and applied therefrom to the comparator 601, down counter 605, and synchronization completion information latch 604. The synchronization detection control signal from the synchronization detection control signal generator 7 is latched at the synchronization detection control signal latch 606, and the synchronization information is compared with the synchronization detection control signals by the comparators 601 (*i.e.*, by inputting synchronization detection control signals into each of the plurality of comparators 601). If the signals match, one of the first tasks allocated is judged as being completed and a pulse is generated by the pulse generator 607. This pulse is regarded as a valid synchronization detection control signal, and the down counter 605 value, which is set to the number of subprocessors 2 or the number of tasks preallocated (*i.e.*, the synchronization information) is decremented by one. When that value has reached zero, synchronization completion information 12A is output to the scheduling section 5. On receiving the incoming synchronization completion information 12A, the scheduling device 5 determines whether the execution of all the allocated tasks is complete. If so, the scheduling device 5 then schedules the allocation of the next tasks and the execution of their synchronization.

Whereas the system bus 6 is employed as a synchronization signal transfer path for the synchronization mechanism 1B of the multiprocessing system in the above described embodiment, this transfer path may be a serial line or a network, in which case the bus arbiter 4 is not required.

Although the synchronization detection mechanism 304 of the multiprocessing system in the described embodiment is provided in the main processor 1, it may be an independent processor.

It will be apparent that the invention, as described above, achieves a multiprocessing system and its synchronous controlling process which enables the efficient synchronous control between a main processor and a plurality of subprocessors without requiring dedicated synchronization mechanisms and signal lines. The synchronization signals between the main processor and plurality of subprocessors are transmitted through a communication path as data information and compared with synchronization information registered so that the completion of tasks allocated to the plurality of subprocessors can be detected.

**Claims**

1.  A synchronous controlling method for a multiprocessing system comprising a main processor (1) and a plurality of subprocessors (2) connected to the main processor (1) via a shared communication path (3), the method comprising the following steps:

    – causing the main processor (1) to schedule an allocation of tasks to the plurality of subprocessors (2) and to generate task information and synchronization information in accordance with an execution of the tasks by the plurality of subprocessors (2);

    – causing the main processor (1) to output task information and synchronization information to the plurality of subprocessors (2) via the communication path (3) as first data information and registering the synchronization information;

    – causing the plurality of subprocessors (2) to decode the first data information, execute corresponding tasks and output synchronization signals indicating a completion of execution to the main processor (1) via the communication path (3) as second data information; and

– causing the main processor (1) to compare the second data information with the registered synchronization information, detect an execution completion of each corresponding task, and schedule a synchronous execution of next tasks by detecting an execution completion of all of the corresponding tasks.

2. A multiprocessing system comprising
   – a main processor (1); and
   – a plurality of subprocessors (2) connected to the main processor (1) via a shared communication path (3), wherein the main processor (1) further comprises:
   – task scheduling means (5) for scheduling and allocating tasks to the plurality of subprocessors (2) and for generating task information and synchronization information;
   – synchronization information registering means (6) for registering the synchronization information;
   – synchronization information outputting means (5A) for outputting the task information and synchronization information to the plurality of subprocessors (2) via the communication path (3) as first data information; and
   – synchronization detecting means (7, 8) for comparing execution completion information input from the plurality of subprocessors (2) via the communication path (3) as second data information with the registered synchronization information, detecting an execution completion for each corresponding task, and directing the task scheduling means (5) to schedule the synchronous execution of next tasks on detecting an execution completion of all of the allocated tasks.

3. The system according to claim 2, wherein the main processor (1) further comprises:
   – a ROM (303) for storing code data;
   – a RAM (302) for storing scheduling data;
   – a CPU (301) for executing instructions based upon the code data stored in the ROM (303) so as to perform a scheduling function;
   – a system bus interface (305) for coupling the CPU (301) to the system bus (3); and
   – a synchronization detection mechanism (304), coupled to the system bus (3) and to the CPU (301), for applying to the CPU (301) synchronization information from the plurality of subprocessors (2).

4. The system according to claim 1 or 2, wherein each of the plurality of subprocessors (2) comprises:
   – a RAM (308) for storing task numbers and task synchronization numbers,
   – a ROM (309) for storing code data;
   – a CPU (307) for executing instructions based upon the code data stored in the ROM (309) so as to perform a synchronization signal data generating function; and
   – a system bus interface (306) for coupling the CPU (307) to the system bus (3).

5. The system according to any of claims 2 to 4, further comprising synchronization detection control signal generator means (7) for generating synchronization detection control signals in accordance with data information received from the plurality of subprocessors (2) and for applying corresponding signals to the synchronization detecting means 8.

6. The system according to any of claims 2 to 5, wherein the synchronization information registering means (6) comprises:
   – a latch (403, 404) for latching and applying the synchronization information from the task scheduling means;
   – a multiplexer (402) for selecting an address from one of the task scheduling means and the select information generator means (405) which constitutes an address location; and
   – a RAM (401) for registering the synchronization information at the address location.

7. The system according to any of claims 2 to 6, wherein the synchronization detecting means (8) comprises:
   – a first latch (602) for latching and applying the synchronization information from the task scheduling means;
   – a second latch (606) for latching and applying synchronization signals from the plurality of subprocessors (2);
   – comparators (601) for comparing the latched synchronization information with the latched synchronization signals; and
   – means (605, 607) for outputting to the synchronization detecting means a signal indicative of the result of the comparison.

8. The system according to any of claims 2 to 7, wherein the synchronization detecting means (8) comprises:
   – a first latch (602, 603) for latching synchronization information from the synchronization information registering means (6);
   – a second latch (606) for latching synchronization detection control signals received from a synchronization detection control signal generator means (7);
   – comparators (601; 61 - 6$\ell$) for comparing the

synchronization information with the synchronization detection control signals;
– an output means (607) for outputting pulses indicative of the result of the comparison; and
– a counter (605) for counting the pulses so as to determine when task execution has been completed.

# FIG. 1

# FIG. 2

MAIN PROCESSOR

2l — SYNCHRONIZATION COMPLETION SIGNAL TRANSFER — 211

2k — SYNCHRONIZATION COMPLETION SIGNAL GENERATION — 210

2j — SYNCHRONIZATION DETECTION EXECUTION — 209

2i — SYNCHRONIZATION DETECTION CONTROL SIGNAL TRANSFER — 208

2h — SYNCHRONIZATION DETECTION CONTROL SIGNAL GENERATION — 207

SCHEDULING — 201

2a — SYNCHRONIZATION INFORMATION GENERATION — 202

2b — SYNCHRONIZATION INFORMATION DISTRIBUTION — 203

2c — SYNCHRONIZATION INFORMATION REGISTRATION — 204

2d — SYNCHRONIZATION INFORMATION SETTING — 205

2e — SYNCHRONIZATION TRANSFER DATA CHECKING — 206

2f

2g

SUBPROCESSOR 1 — — — SUBPROCESSOR n

2p — SYNCHRONIZATION INFORMATION SETTING — 212

2q — TASK EXECUTION — 213

2r — SYNCHRONIZATION SIGNAL DATA GENERATION — 214

2s — SYNCHRONIZATION INFORMATION SETTING

2t — TASK EXECUTION

2u — SYNCHRONIZATION SIGNAL DATA GENERATION

2v

SYNCHRONIZATION SIGNAL DATA TRANSFER — 215

## FIG. 3

MAIN PROCESSOR

303

ROM
SCHEDULING
FUNCTING

301
CPU

RAM
SCHEDULING
DATA

302

1

LOCAL BUS

304
SYNCHRONIZATION
DETECTION
MECHANISM

305
SYSTEM BUS
INTERFACE

4

BUS ARBITER

SYSTEM BUS
3

2

SYSTEM BUS
INTERFACE
306

LOCAL BUS

309
ROM
SYNCHRONI-
ZATION
SIGNAL DATA
GENERATING
FUNCTION

307
CPU

308
RAM
TASK
NUMBER
TASK
SYNCHRONI-
ZATION
SIGNAL

SUBPROCESSOR 1

2

SYSTEM BUS
INTERFACE
306

LOCAL BUS

309
ROM
SYNCHRONI-
ZATION
SIGNAL DATA
GENERATING
FUNCTION

307
CPU

308
RAM
TASK
NUMBER
TASK
SYNCHRONI-
ZATION
SIGNAL

SUBPROCESSOR n

# FIG. 4

# FIG. 5

## FIG. 6

# FIG. 7